# NEW EUROPEAN PATENT SPECIFICATION

(11) **EP 2 651 247 B2**
(45) Date of publication and mention of the opposition decision: **22.02.2023**
(45) Mention of the grant of the patent: 21.09.2016
(21) Application number: 11797226.5
(22) Date of filing: 13.12.2011
(51) Int. Cl.: A23L 33/00

(54) **IMPROVED NUTRITIONAL COMPOSITION, ESPECIALLY FOR INFANTS, WITH PARTICULAR FAT PARTICLES**
VERBESSERTE ERNÄHRUNGSZUSAMMENSETZUNG, INSBESONDERE FÜR KLEINKINDER, MIT SPEZIELLEN FETTTEILCHEN
COMPOSITION NUTRITIONNELLE AMÉLIORÉE, SPÉCIALEMENT POUR LES BÉBÉS, CONTENANT DES PARTICULES DE GRAISSE PARTICULIÈRES

(30) Priority: 15.12.2010 EP 10195137
(43) Date of publication of application: 23.10.2013
(73) Proprietor: Société des Produits Nestlé S.A., 1800 Vevey (CH)
(72) Inventor: ERDMANN, Peter, CH-3006 Bern (CH); BRÜGGER, Juan Carlos, CEP 13087-723 Campinas - SP (BR); FANKHAUSER, Peter, CH-3510 Konolfingen (CH); SINGTOKAEW, Siripop, Pathumthani 12130 (TH)
(74) Representative: Plougmann Vingtoft a/s
(86) International application number: PCT/EP2011/072525
(87) International publication number: WO 2012/080205

(56) References cited:
- WO-A1-2009/154448
- WO-A1-2010/027258
- US-A1- 2007 031 538
- MICHALSKI M C ET AL: "Size Distribution of Fat Globules in Human Colostrum, Breast Milk, and Infant Formula", JOURNAL OF DAIRY SCIENCE, AMERICAN DAIRY SCIENCE ASSOCIATION, US, vol. 88, no. 6, 1 June 2005 (2005-06-01), pages 1927-1940, XP026954492, ISSN: 0022-0302 [retrieved on 2005-06-01] cited in the application

## Description

### Field of the invention

The present invention relates to a method for the manufacture of a dairy product or nutritional formula wherein the fat particle distribution resembles that of human breast milk. In a preferred embodiment, the nutritional formula is an infant formula.

### Background of the invention

Infant formulas are manufactured to be as close as possible to human breast milk in term of nutritional quality. Fat is a major component of human milk and is among the key nutrients in human milk. The chemical and biochemical nature of human milk lipids have been studied extensively and infant formulas have been developed that has a fatty acid profile with many of the same chemical and biochemical properties as human breast milk.

However the physical structure of human milk lipids is also of nutritional significance for the infant and important for baby growth. The physical structure of milk fat has been shown to be important for lipase activity, cholesterol availability and lipid absorption in the gastrointestinal tract of neonates (Michalski et al, 2005, J Dairy Sci 88:1927-1940).

Unfortunately, current industrial manufacturing processes do not allow matching the same particle size distribution for fat in infant formulas. For the manufacturing of infant formula, vegetable fat mixes are added to target a fatty acid profile closer to breast milk and an intermediate homogeniser is used in this process to get small fat droplet for a better stability. Infant formulas have therefore a high proportion of fat droplet below 1 µm compared to human breast milk. Thus, the infant formula produced have a good stability and a nutritional fatty acid profile close to breast milk but the fat particle size distribution is different from breast milk.

Michalski et al discloses the fat particle distribution in human milk and in infant nutritional formulas on the market (Michalski et al, 2005, J Dairy Sci 88:1927-1940).

WO 2010/027259 and WO 2010/027258 relates to infant formulas comprising a lipid component which has lipid globules coated with polar lipids. The fat particle size distribution is bimodal and has high proportion of fat particles below 1 µm.

WO 2009/154448 relates to an infant formula which is unstable and forms a fat gradient when it is fed to infants.

Hence, there is a need for a method to produce nutritional formulas, such as infant formulas, with a fat particle size distribution closer to that of human breast milk. Especially there is a need for a method to produce infant formula which is without a high proportion of fat droplets below 1 µm compared to human breast milk and which is still phase stable.

### Summary of the invention

The present inventors surprisingly found that using a simple rotor stator set-up in the manufacture of a dairy product or nutritional formula it is possible to obtain a fat particle distribution which is close to that in human breast milk. Thus, according to the present invention it is possible using standard high shear mixing to obtain a mixture with has a fat particle size distribution which is similar to human breast milk and still is phase stable.

The present invention relates in particular to infant formulas comprising lipids with a fat particle size distribution resembling the fat particle size distribution of human breast milk. The fat particle size distribution is monomodal. Furthermore it has a low proportion of fat particles below 1 µm. The formula is phase stable. This can be achieved upon homogenizing the lipid component using a high shear mixer and finally adjusting of the particles size distribution by homogenisation between 0 and 100 bars

### Detailed Description

The present invention pertains to a nutritional formula in which lipid is present in the form of lipid globules, emulsified in an aqueous phase. The lipid globules of the present composition have a fat particle size distribution which resembles that of human breast milk.

### Definitions:

"Infant" means a child under the age of 12 months; in one embodiment of the invention the term "infant" can be extended to include children at any age up to and including 18 months, or at any age up to and including 24 months.

"Infant formula" means a nutritional formula intended for the complete nutrition of infants during the first four to six months of life and as a complement to other foodstuffs up to the age of 12 months. In one embodiment of the invention the term "infant formula" can be extended to include a nutritional formula intended as a complement to other foodstuffs up to and including the age of 18 months, or up to and including the age of 24 months; In one embodiment the term "infant formula" comprises follow-up formula and/or growing up milk (in the sense generally accepted in the art).

"High shear rotor stator mixer" means a mixing equipment, comprising a rotor that turns at high speed within a stationary stator, which applies high shear to the product. This type of mixing breaks the lipid globules in the present invention into smaller globules;

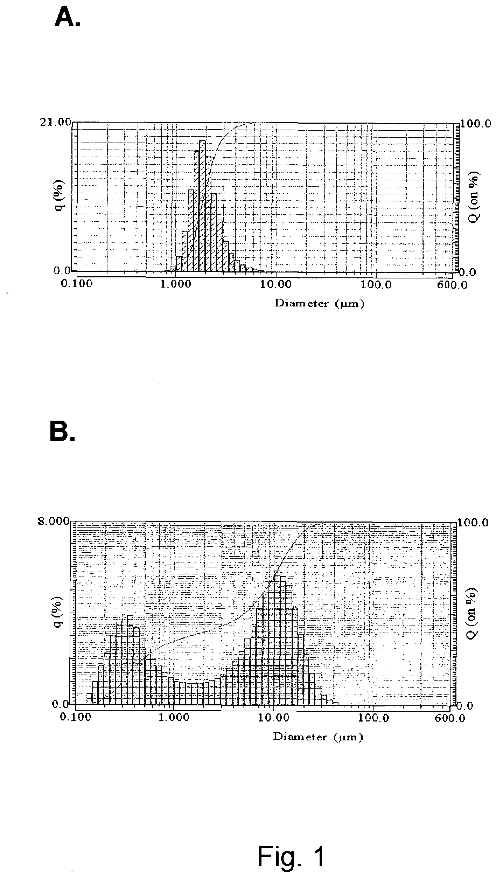

"Homogenization" refers to a process which increases emulsion uniformity and stability by reducing the size of the lipid globules in the formula. This process step can be performed with a variety of mixing equipment, which applies high shear to the product;
"monomodal fat particle size distribution" refers herein to a collection of fat particles with a single large peak on a particle size distribution curve (volume percentages of particles of different sizes on the ordinate or Y-axis and the fat particle diameter on the abscissa or X-axis) and optionally one or more smaller peaks that may or may not overlap with the large peak. The area of the single large peak constitutes at least 40% of the total volume of the fat particles, such as at least 45% of the fat particles, such as at least 50% of the fat particles, such as at least 55% of the fat particles, such as at least 60%, such as at least 65% of the fat particles, such as at least 70%, such as at least 75% of the fat particles, such as at least 80%, such as at least 85% of the fat particles, such as at least 90% of the fat particles or such as at least 95% of the fat particles. A monomodal distribution is preferable characterized by a distribution where the maximum volume percentages of particles have a mode diameter X and wherein at least Y% of the particles have a diameter within the range of X±Z µm. An example of a monomodal fat particle size distribution is illustrated in figure 1A;

"bimodal particle size distribution" refers to a collection of particles having two large peaks (the area of each peak constitutes at least 20%, such as at least 30% such as at least 40% of the total volume of fat particles) on a particle size distribution curve, and a multimodal particle size distribution refers to a collection of particles having three or more large peaks on a particle size distribution curve. An example of a bimodal distribution is illustrated in figure 1B;

"mode diameter" refers to the diameter X, which is the diameter corresponding to the peak value in a graphic representation, having on the X-axis the diameter and on the Y-axis the volume (%). Thus a monomodal distribution is preferable characterized by a distribution where the maximum volume percentages of particles have a diameter X.

"Then most frequent fat particle diameter (m)" refers herein to the fat particle diameter that is most frequent. In the present invention it is relevant to plot the fat particle diameter along the x-axis and the number of fat particles having the specific diameter along the y-axis. Thus the x-value corresponding to the single local maximum (f(m)) in a monomodal curve is the most frequent fat particle diameter (m);

"phase stable" means the lipid part is not separated from the aqueous part of the formula, thus there is no visible cream layer appearing on the surface of the liquid formula at least one hour after reconstitution of the powder; "probiotic bacteria" means microbial cell preparations or components of microbial cells with a beneficial effect on the health or well-being of the host. A definition of probiotic bacteria is given in Salminen S, Quwehand A. Benno Y. et al "Probiotics: how should they be defined" Trend Food Sci. Technol. 1999;10 107-110);
"Prebiotic" means a selectively fermented ingredient that allows specific changes, both in the composition and/or activity in the gastrointestinal microflora that confers benefits upon host well-being and health. Prebiotica are discussed in Roberfroid MB; Prebiotics: The Concept Revisited. J Nutr. 2007; 137: 830S);
"A powder" in the present context means a dry, bulk solid composed of a large number of very fine particles that may flow freely when shaken or tilted. The powder may contain water in amounts not exceeding 10%, such as not exceeding 9%, 8%, 7%, 6%, 5%, 4%, 3%, 2%, 1.5%, 1% or 0.5%.

### The process

One aspect of the present invention relates to a process for the manufacture of a dairy product or nutritional formula, such as an infant formula, which has a fat particle distribution with resembles that in human breast milk. In particular, the process of the invention provides an infant formula, which has a monomodal fat particle size distribution with a low proportion of fat particles with a diameter below 1 µm.

The process comprises the steps of:
a) providing a mixture comprising vegetable fat, protein and carbohydrates,
b) mixing said mixture in a high shear rotor stator mixer and subsequently subjecting said mixture to homogenization so as to provide a composition with a monomodal fat particle size distribution wherein 5% or less of the fat particles have a size of less than 0.8 µm, and at least 95% of the fat particles have a size of between 0.8 µm and 5 µm, and 5% or less of the fat particles have a size of more than 5 µm.

In countries were fresh milk is not available, infant formulas are manufactured by re-dissolving milk powder in water to 28-32% of total solids. The recombined milk is standardized with vegetable fat; vegetable fat mixes being added to target a fatty acid profile closer to human breast milk, and intermediate homogenizer is used in this process to get small fat droplet for at better stability. The mixture is then concentrated by an evaporation process to 30-70% of total solids followed by spray drying. Thus in these processes the added water is re-evaporated.

In the present invention a simple rotor-stator system replaces the conventional steps of homogenization, evaporation and heat treatment with direct steam injection.

In step a) in the process according to the invention the protein source, the carbohydrate source, and the lipid source are mixed or preferably blended together in appropriate proportions. Optionally the protein source and carbohydrate source are dissolved in water followed by hydration before the lipid source is added. Salts, LC-PUFAs, honey and/or prebiotics may be added to the mixture. Any lipophilic vitamins, emulsifiers and the like may be dissolved into the fat source prior to blending. The whole mixture is subsequently pre-heated and passed through a rotor-stator mixer resulting in a monomodal fat particle size distribution.

In a particular preferred embodiment the protein source and carbohydrate source and optionally other ingredients are dissolved in softened water at a temperature in the range of 50-80°C, such as 50°C, such as 60°C, such as 65°C, such as 70°C, such as 75°C. This may be followed by continuous hydration at a temperature in the range 50-80°C, such as 50°C, such as 60°C, such as 65°C, such as 70°C, such as 75°C for at period of 15-120 min, such as 15-75 min, such as 20-60 min, such as 30-45 min.

A preferred embodiment is a process wherein protein and carbohydrates are combined before addition of vegetable fat.

In a further embodiment, the invention relates to process for the manufacture of an nutritional formula, such as an infant formula comprising protein, vegetable fat and carbohydrates and one or more components selected from the group consisting of vitamins, minerals, nucleotides, amino acids and animal fat, and any other nutritionally beneficiary constituents.

Infant formulas are conventionally heat treated to guaranty the bacteriologic quality of the product. Hence, step a) of the process according to the invention preferably includes heat treatment. This may be by traditional methods such as retort sterilization, pasteurization or high-temperature short-time (HTST) treatment.

In a preferred embodiment the protein source, such as but not limited to skimmed milk powder, and the carbohydrate source, such as but not limited to lactose, are combined and dissolved before addition of vegetable fat in step a) in the process.

In step b) the rotor-stator system is a Continuous High Shear Homogenizer Mixer. The Continuous High Shear Homogenizer Mixer may be a rotor-stator mixer sold under the name Cavitron. Rotor-stator mixers such as the Cavitron are mixing equipment based on the physical effects between rotors and stators. The recombined mix to be processed passes through the rotor / stator system and is accelerated centrifugally. The rotor system runs at large speed, and the recombined mix is compressed in the chambers (between rotor and stator). Recombined mix expands in a shock-like way and changes over in the next centrically external chamber.

Preferably, the mixture is homogenized in said rotor stator system at 5000-15000 rpm, such as 6000-14000 rpm, such as 7000-14000 rpm, such as 8000-14000 rpm, 9000-14000 rpm, 10000-14000 rpm, 11000-13000 rpm, such as at 12000 rpm.

As mentioned above, manufacture of infant formulas includes heat treatment to guaranty the bacteriologic quality of the product. In preferred embodiments, the mixture comprising vegetable fat, protein and carbohydrates is heated to 80-90°C, such as to 82-87°C, such as to 85°C, with a holding time of 10-30 seconds, such as 10-20 seconds, such as 15 seconds, during homogenization.

As the skilled person will know, homogenization increases emulsion uniformity and stability by reducing the size of the fat droplets in the formula. To arrive at a fat particle size distribution as in human breast milk, the liquid mixture may then be subjected to further homogenization in the rotor stator system during which the homogenization pressure is adjusted in order to obtain the desired particle size. It is the gist of the present invention that one can readily arrive at a desired fat particle size distribution by adjusting the homogenization pressure. In particular embodiments, the pressure is set to between 0 and 100 bar, such as between 10 and 100 bar between 10 and 80 bar, between 10 and 60 bar, between 10 and 50 bar, between 10 and 40 bar, or such as between 10 and 30 bar. It will be within the capacity of the average skilled person to select the homogenization pressure which, depending on other parameters such as viscosity and concentration of the composition, results in the desired fat particle size distribution.

Thus, a particular embodiment of the invention relates to a process wherein the mixture is homogenized at a pressure as defined above so as to provide a composition with a monomodal fat particle size distribution wherein the percentage of fat particles with a diameter below 1 µm is less than 15 %, such as less than 14%, such as less than 13%, such as less than 12%, such as less than 11%, such as less than 10%, such as less than 9%, such as less than 8%, such as less than 7%, such as less than 6%, such as less than 5%, such as less than 4%, such as less than 3%, such as less than 2%, such as less than 1%, such as less than 0.8%, such as less than 0.5%, such as less than 0.4%.

In another particular embodiment the mixture is homogenized under conditions as defined above so as to provide a composition with a monomodal fat particle size distribution, wherein the percentage of fat particles with a diameter below 0.8 µm is less than 15 %, such as less than 14%, such as less than 13%, such as less than 12%, such as less than 11%, such as less than 10%, such as less than 9%, such as less than 8%, such as less than 7%, such as less than 6%, such as less than 5%, such as less than 4%, such as less than 3%, such as less than 2%, such as less than 1%, such as less than 0.8%, such as less than 0.5%, such as less than 0.4%.

In yet another embodiment the mixture is homogenized under conditions as defined above so as to provide a composition with a monomodal fat particle size distribution wherein the percentage of fat particles with a diameter below 0.5 µm is less than 15 %, such as less than 14%, such as less than 13%, such as less than 12%, such as less than 11%, such as less than 10%, such as less than 9%, such as less than 8%, such as less than 7%, such as less than 6%, such as less than 5%, such as less than 4%, such as less than 3%, such as less than 2%, such as less than 1%, such as less than 0.8%, such as less than 0.5%, such as less than 0.4%.

In still another embodiment the mixture is homogenized under conditions as defined above so as to provide a composition with a monomodal fat particle size distribution wherein the amount of fat particles with a diameter between 0.8 and 5 µm is above 65%, such as above 70% such as above 75%, such as above 80%, such as above 85%, such as above 90%, such as above 91%, such as above 92%, such as above 93%, such as above 94%, such as above 95%, such as above 96%, such as above 97%, such as above 98%, such as above 99%.

In another preferred embodiment the mixture is homogenized under conditions as defined above so as to provide a composition with a monomodal fat particle size distribution, wherein the amount of fat particles with a diameter of more than 5 µm is less than 15%, such as less than 14%, such as less than 13%, such as less than 12%, such as less than 11%, such as less than 10%, such as less than 9%, such as less than 8%, such as less than 7%, such as less than 6%, such as less than 5%, such as less than 4%, such as less than 3%, such as less than 2%, such as less than 1%.

Other embodiments of the present invention relates to a process for the manufacture of a dairy product or nutritional formula, such as an infant formula, wherein homogenization is performed under conditions as defined above so as to provide a composition with a monomodal fat particle size distribution, wherein 5% or less of the fat particles have a size of less than 0.8 µm, and at least 95% of the fat particles have a size of between 0.8 µm and 5 µm, and 5% or less of the fat particles have a size of more than 5 µm.

Another preferred embodiment relates to a process for the manufacture of a dairy product or nutritional formula, such as an infant formula, wherein homogenization is performed under conditions as defined above so as to provide a composition with a monomodal fat particle size distribution, wherein the maximum volume percentages of particles have a mode diameter X and wherein at least Y% of the particles have a diameter within the range of X±Z µm. Y is preferably a number in the range 20-100, preferably in the range 30-100, such as 40-100, 50-100, 60-100, 70-100, 80-100, and most preferably in the range 90-95.

The mode diameter, X, is preferably a number in the range 0.8-12 µm, preferably in the range 0.8-11 µm, 0.8-10 µm, 0.8-9 µm, 0.8-8 µm, 0.8-7 µm, 0.8-6 µm, 0.8-5 µm, 0.8-4 µm, 1-4 µm, 1-3 µm, 2-6, 2-5, 2-4 µm, and most preferably in the range 2-3 µm.

In a preferred embodiment Y corresponds to 40%, such as 50%, 60%, 70%, 80%, 90% or 95% of the particles.

In a preferred embodiment Z corresponds to a number in the range 0.01-10 µm, such as 0.2-5 µm, 0.3-5 µm, 0.4-5 µm, 0.5-5 µm, 0.3-4 µm, 0.4-4 µm, 0.5-4 µm, 0.3-3 µm, 0.4-3 µm, 0.5-3 µm, 0.3-2 µm, 0.4-2 µm, 0.5-2 µm, 0.3-1 µm, 0.4-1 µm, 0.5-1 µm, 0.3-0.8 µm, 0.4-0.8 µm, 0.5-0.8 µm, 0.6-0.8 µm, 0.7-0.8 µm, 0.3-0.7 µm, 0.4-0.7 µm, 0.5-0.7 µm, 0.6-0.7 µm, 0.3-0.6 µm, 0.4-0.6 µm, or such as 0.5-0.6 µm, in particular 0,5 µm, 0,6 µm, 0,7 µm 0.8 µm, 0,9 µm, 1 µm, 1.5 µm, 2 µm, 2.5 µm, 3 µm, 3.5 µm, 4 µm, 4.5 µm, 5 µm, 6 µm, 7 µm, 8 µm, 9 µm or 10 µm.

The volume of the lipid globule and its size distribution can be determined by using a particle size analyser such as a Mastersizer (Malvern Instruments, Malvern, UK) for example by the method described in Michalski et al. 2001, Lait 81: 787-796.

The homogenized mixture may then be further cooled and any heat sensitive components; such as vitamins and minerals may be added. The pH and solids content of the homogenized mixture is conveniently standardized at this point.

Optionally the homogenized mixture is transferred to a suitable drying apparatus such as a spray drier or freeze drier and converted to powder.

A preferred embodiment of the present invention relates to a process wherein the mixture is homogenized at a pressure as defined above and subsequently dried, so as to provide a powdered composition with a monomodal fat particle size distribution as defined above when reconstituted in liquid. In particular, the particle size distribution may be such that 5% or less of the fat particles have a size of less than 0.8 µm, and at least 95% of the fat particles have a size of between 0.8 µm and 5 µm, and 5% or less of the fat particles have a size of more than 5 µm.

Another preferred embodiment relates to a process wherein the mixture is homogenized at a pressure as defined above and subsequently dried so as to provide a powdered composition with a monomodal fat particle size distribution, wherein the mode diameter X is a number in the range 0.8-12 µm, preferably in the range 0.8-11 µm, 0.8-10 µm, 0.8-9 µm, 0.8-8 µm, 0.8-7 µm, 0.8-6 µm, 0.8-5 µm, 0.8-4 µm, 1-4 µm, 1-3 µm, 2-4 µm, and most preferably in the range 2-3 µm when reconstituted in liquid.

In a preferred embodiment the at least one of source of proteins are selected from the group of milk, soy and rice.

In a particular preferred embodiment the at least one source of proteins are selected from the group consisting of caseinates, whey proteins, whey protein isolates, whey protein concentrates, whey powders, milk protein concentrates, full cream milk powder, skimmed milk powder and the hydrolysates thereof or mixtures thereof.

In another particular preferred embodiment the at least one source of proteins are selected from the group consisting of soy isolates, soy proteins, soy protein hydrolysates or mixtures thereof.

The protein(s) in the protein source may be intact or partially hydrolysed or a mixture of intact and hydrolysed proteins may be used.

The preferred protein source is a mixture of casein and whey proteins. The whey protein may be a whey protein isolate, acid whey, sweet whey or sweet whey from which the caseino-glycomacropeptide has been removed (modified sweet whey). Preferably, however, the whey protein is modified sweet whey. Sweet whey is a readily available by-product of cheese making and is frequently used in the manufacture of nutritional compositions based on cows' milk.

When the at least one source of protein is a mixture of whey and casein, the whey:casein may be any ratio, such as from 100% whey to 23/77, such as from 40:60 to 80:20, such as from 40:60 to 70:30, from 40:60 to 60:40.

The nutritional composition of the present invention contains at least one source of lipids. The lipid source may be any lipid or fat which is suitable for use in nutritional compositions to be fed to infants. Preferred fat sources include vegetable and/or animal fat.

In a preferred embodiment the lipid source is an oil blend.

The lipid source may be heated up to a temperature in the range of 20-50 °C, such as 25-45 °C, such as 25-40 °C, such as 25-35 °C, such as 27-32 °C, such as 29-31 °C and added via a continuous dosing system. The lipid source is dosed continuously into the mixture of protein and carbohydrate.

Thus in a preferred embodiment the vegetable fat is added via a continuous dosing system.

In another preferred embodiment the vegetable fat is added in batch.

Preferred vegetable fat sources include apricot kernel oil, apricot oil, almond oil, avocado oil, castor oil, corn oil, cottonseed oil, grape seed oil, jojoba oil, maize oil, linseed oil (flaxseed oil), rape seed oil (such as colza oil, low crucic acid rape seed oil and canola oil), salvia oil, perilla oil, purslane oil, lingonberry oil, sea buckthorn oil, hemp oil, high oleic sunflower oil, safflower oil, high oleic safflower oil, olive oil, black currant seed oil, echium oil, coconut oil, coconut fat, cocoa butter, palm oil and palm kernel oil, palmolein oil, peanut oil, persil oil, poppy seed oil, sesame oil, thistle seed oil, walnut oil, wheat germ oil, sunflower oil, soybean oil and/or mixtures thereof.

In another preferred embodiment the vegetable fat may selected from the list consisting of hardening fats and/or oils, hydrogenated fats and/or oils, unhydrogenated fats and/or oils, and mixtures thereof.

The dairy product or nutritional formula may also comprise animal fat and/or synthetic fat.

In a preferred embodiment the dairy product or nutritional formula may also comprise cream and/or butteroil.

Thus in a preferred embodiment the aqueous mixture in step a) in the process further comprises at least one fat product selected from the group of synthetic fat, synthetic oil, semi-synthetic fat, semi-synthetic oil, animal fat such as milk fat or butter oil.

In another preferred embodiment the vegetable fat and/or animal fat may be in the form of a dry emulsified fat powder i.e. a spray dried emulsion of a vegetable and/or animal fat.

Supplementation of infant nutritional formulas with long-chain (LC) PUFA at levels resembling human milk is recommended because they provide biochemical and functional benefits to the neonate.

Polyunsaturated fatty acids (PUFAs) are fatty acids that contain more than one carbon to carbon double bond. Examples of PUFAs are Omega-3, Omega-6 and Omega-9 fatty acids.

Examples of omega-3 fatty acids include Alpha-linolenic acid (ALA), Stearidonic acid (STD), Eicosatrienoic acid (ETE), Eicosatetraenoic acid (ETA), Eicosapentaenoic acid (EPA), Docosapentaenoic acid (DPA, Clupanodonic acid), Docosahexaenoic acid (DHA), Tetracosapentaenoic acid and Tetracosahexaenoic acid (Nisinic acid).

Examples of omega- 6 fatty acids include Linoleic acid, Gamma-linolenic acid (GLA), Eicosadienoic acid,Dihomo-gamma-linolenic acid (DGLA), Arachidonic acid (ARA),Docosadienoic acid, Adrenic acid and Docosapentaenoic acid (Osbond acid).

Thus a particular preferred embodiment is a process wherein the mixture in step a) further comprises one or more LC-PUFAs.

Particular relevant LC-PUFAs for the present invention are LC-PUFAs such as Docosahexaenoic acid (DHA), Eicosapentaenoic acid (EPA), Docosapentaenoic acid (DPA) and/or Arachidonic acid (ARA).

The particular lipid sources as recited in the preferable embodiments of the invention may present the advantageous effect of enhancing the homogenization of the compostion and can thus help delivering the desired fat particular size distribution.

In a preferred embodiment long chain polyunsaturated fatty acids (LC-PUFAs) are added to the mixture in step a). In another preferred embodiment the LC-PUFAs is added to the mixture in step a) in a separate continuous dosing after addition of the vegetable fat.

The process of the invention relies on a source of carbohydrates. In one embodiment of the present invention the preferred source of carbohydrates is lactose although other carbohydrates such as saccharose, maltodextrin, and starch may also be added.

In another embodiment of the present invention, lactose is not used if the infant formula is a cow's milk-based lactose-free formulas or specialized non-milk protein formulas or hydrolyzed protein formulas for infants with milk protein sensitivity. Lactose is also not present in soy-based formulas. Therefore, those formulas without lactose will use other sources of carbohydrates like sucrose and glucose, natural and modified starches, monosaccharides and indigestible carbohydrates.

Preferably in one embodiment, the carbohydrate content of the nutritional composition is between 9 and 14 g/100 kcal.

In a particular preferred embodiment the at least one source of carbohydrates is selected from the group consisting of lactose, corn syrup solids, fructose, glucose, maltodextrins, dried glucose syrups, sucrose, trehalose, galactose, maltose, honey powders, starch, oligosaccharides, raftiline and raftilose.

In another preferred embodiment the source of carbohydrate is lactose.

Other ingredients may be added to the infant formula of the present invention such as but not limited to emulsifiers and stabilizers. Emulsifiers and stabilizers are raw materials that are added to prevent the separation of the oil and watersoluble component in the infant formula. Some commonly used emulsifiers include mono, di-glycerides, and gums.

In addition, formulas not made with cow's milk should preferably be supplemented with biotin, choline, and/or inositol.

In order to obtain infant formula which are phase stable conventional infant formulas have a high proportion of fat droplets with a particle size below 1 µm.

Increasing the fat particle diameter compared to standard infant formula using conventional processes will lead to "screaming up" of the fat droplets due to the differences in densities between the fat and water. This results in an increased fat concentration in the upper part of the container compared to the lower part of the container i.e. phase separation which is undesired.

Particular embodiments of the invention relate to a process for manufacture of a dairy product or nutritional formula, such as an infant formula, which is phase stable.

Thus, a preferred embodiment is a process wherein the dairy product or nutritional formula, such as the infant formula, is not creaming up until least one hour after it has been reconstituted .

Hence, a preferred embodiment is a process wherein the dairy product or nutritional formula, such as the infant formula, is not creaming up until at least ½ hour after it has been reconstituted, such as until at least 1 hour, such as at least 2 hours, such as at least 3 hours, such as at least 6 hours such as at least 12 hours, such as at least 15 hours, such as at least 18 hours, such as at least 24 hours, such as at least 36 hours, such as at least 48 hours.

In a particular preferred embodiment is a process wherein the a dairy product or nutritional formula, such as the infant formula, is not creaming up until at least 1 day after reconstitution, such as until at least 2 days, such as at least 3 days, such as at least 4 days, such as at least 5 days, such as at least 6 days, such as at least 7 days, such as at least 8 days, such as at least 10 days, such as at least 15 days, such as at least 20 days, such as at least 30 days, such as at least 60 days.

In a preferred embodiment the a dairy product or nutritional formula, such as the infant formula, has a total energy density between 60 to 70 kcal per 100ml.

### Product

A second aspect of the present invention relates to an infant nutritional formula which is obtainable by the process described above.

A third aspect of the present invention relates to a dairy product or nutritional formula, such as an infant formula, with a fat particle size distribution closer to human breast milk such as an infant nutritional formula comprising vegetable fat, protein and carbohydrates characterized by having a monomodal fat particle distribution, wherein the percentage of fat particles with a diameter below 1 µm is less than 15 %, such as less than 14%, such as less than 13%, such as less than 12%, such as less than 11%, such as less than 10%, such as less than 9%, such as less than 8%, such as less than 7%, such as less than 6%, such as less than 5%, such as less than 4%, such as less than 3%, such as less than 2%, such as less than 1%, such as less than 0.8%, such as less than 0.5%, such as less than 0.4%.

In another particular preferred embodiment the percentage of fat particles with a diameter below 0.8 µm is less than 4%, such as less than 3%, such as less than 2%, such as less than 1%, such as less than 0.8%, such as less than 0.5%, such as less than 0.4%.

In yet another particular preferred embodiment the percentage fat particles with a diameter below 0.5 µm is less than 4%, such as less than 3%, such as less than 2%, such as less than 1%, such as less than 0.8%, such as less than 0.5%, such as less than 0.4%.

In still another preferred embodiment the amount of fat particles with a diameter between 0.8 and 5 µm is above such as above 97%, such as above 98%, such as above 99%.

In another preferred embodiment the amount of fat particles with a diameter of more than 5 µm is less than 4%, such as less than 3%, such as less than 2%, such as less than 1%.

One aspect of the present invention relates to a process for manufacture of a dairy product or nutritional formula, such as an infant formula, which has a fat particle size distribution of wherein 5% or less of the fat particles have a size of less than 0.8 µm, and at least 95% of the fat particles have a size of between 0.8 µm and 5 µm, and 5% or less of the fat particles have a size of more than 5 µm.

Another preferred embodiment relates to a process for manufacture of a dairy product or nutritional formula, such as an infant formula, which have a fat particle size distribution wherein the monomodal distribution is characterized by a distribution where the maximum volume percentages of particles have a mode diameter X and wherein at least Y% of the particles have a diameter within the range of X±Z µm. Y is preferably a number in the range 20-100, preferably in the range 30-100, such as 40-100, 50-100, 60-100, 70-100, 80-100, and most preferably in the range 90-95.

The mode diameter, X, is preferably a number in the range 0.8-12 µm, preferably in the range 0.8-11 µm, 0.8-10 µm, 0.8-9 µm, 0.8-8 µm, 0.8-7 µm, 0.8-6 µm, 0.8-5 µm, 0.8-4 µm, 1-4 µm, 1-3 µm, 2-6, 2-5, 2-4 µm, and most preferably in the range 2-3 µm.

In a preferred embodiment at least Y% of the particles corresponds to at least 40%, such as at least 50%, 60%, 70%, 80%, 90% or at least 95% of the particles.

In a preferred embodiment Z corresponds to a number in the range 0.01-10 µm, such as 0.2-5 µm, 0.3-5 µm, 0.4-5 µm, 0.5-5 µm, 0.3-4 µmµm, 0.4-4 µm, 0.5-4 µm, 0.3-3 µm, 0.4-3 µm, 0.5-3 µm, 0.3-2 µm, 0.4-2 µm, 0.5-2 µm, 0.3-1 µm, 0.4-1 µm, 0.5-1 µm, 0.3-0.8 µm, 0.4-0.8 µm, 0.5-0.8 µm, 0.6-0.8 µm, 0.7-0.8 µm, 0.3-0.7 µm, 0.4-0.7 µm, 0.5-0.7 µm, 0.6-0.7 µm, 0.3-0.6 µm, 0.4-0.6 µm, or such as 0.5-0.6 µm, in particular 0,5 µm, 0,6 µm, 0,7 µm 0.8 µm, 0,9 µm, 1 µm, 1.5 µm, 2 µm, 2.5 µm, 3 µm, 3.5 µm, 4 µm, 4.5 µm, 5 µm, 6 µm, 7 µm, 8 µm, 9 µm or 10 µm.

The volume of the lipid globule and its size distribution can be determined by methods, such as a particle size analyser such as a Mastersizer (Malvern Instruments, Malvern, UK) for example by the method described in Michalski et al 2001, Lait 81: 787-796.

A preferred embodiment of the present invention relates to a dairy product or nutritional formula, such as an infant formula, in powder form, comprising vegetable fat, protein and carbohydrates, characterized by having a monomodal fat particle distribution as disclosed above, when reconstituted in liquid.

in particular, the a dairy product or nutritional formula, such as an infant formula, in powder form may be characterized by having a monomodal fat particle distribution wherein the mode diameter X is in the range 0.8-5 µm, and wherein 5% or less of fat particles having a size of less than 0.8 µm, and at least 95% of fat particle having a size of between 0.8 µm and 5 µm, and 5% or less of fat particle having a size of more than 5 µm, when the infant nutritional formula is reconstituted in liquid.

According to other embodiments of the invention, the dairy product or nutritional formula, such as the infant formula, is obtainable by the process described herein.

In a preferred embodiment the present invention relates to an infant formula intended for infants between 0 and 6 months.

In another preferred embodiment the present invention relates to a hydrolyzed infant formula.

The nutritional composition may optionally contain other substances which may have a beneficial effect such as probiotic bacteria, fibres, lactoferrin, nucleotides, nucleosides, and/or the like in the amounts such as those customarily found in nutritional compositions to be fed to infants.

In one embodiment the present invention relates to a dairy product or nutritional formula, such as an infant formula, further comprising probiotic bacteria.

In a preferred embodiment the probiotic bacteria are selected from the group consisting of Lactobacillus such as *Lactobacillus rhamnosus, Lactobacillus paracasei* and *Lactobacillus reuteri* and Bifidobacterium such as *Bifidobacterium lactis, Bifidobacterium breve* and *Bifidobacterium longum.*

In a particular preferred embodiment the Lactobacillus and/or Bifidobacterium is a strain are selected from the list consisting of *Lactobacillus rhamnosus* ATCC 53103, *Lactobacillus rhamnosus* CGMCC 1.3724, *Lactobacillus reuteri* ATCC 55730, *Lactobacillus paracasei* CNCM 1-2116, the strain of *B. lactis* (sold by the Christian Hansen company of Denmark under the trade mark BbI 2) and *Bifidobacterium longum* ATCC BAA-999 (obtainable from Morinaga Milk Industry Co. Ltd. of Japan under the trade mark BB536).

The a dairy product or nutritional formula, such as the infant formula, may optionally further comprise prebiotics, such as nondigestable carbohydrates that promote the growth of probiotic bacteria in the gut.

In a preferred embodiment the a dairy product or nutritional formula, such as the infant formula, comprises prebiotics selected from the group consisting of fructooligosaccharides (FOS), raftilose, inulin, raftiline, lactulose, cows' milk oligosaccharides (CMOS) and galactooligosaccharides (GOS).

The nutritional composition may also contain all vitamins and minerals understood to be essential in the daily diet in nutritionally significant amounts.

Thus a preferred embodiment relates to a dairy product or nutritional formula, such as an infant formula, further comprising vitamins.

Minimum requirements have been established for certain vitamins and minerals. Examples of minerals, vitamins and other nutrients optionally present in the nutritional composition include vitamin A, vitamin B1, vitamin B2, vitamin B6, vitamin B12, vitamin E, vitamin K, vitamin C, vitamin D, folic acid, inositol, niacin, biotin, pantothenic acid, choline, calcium, phosphorous, iodine, iron, magnesium, copper, zinc, manganese, chloride, potassium, sodium, selenium, chromium, molybdenum, taurine, and L-carnitine. Minerals are usually added in salt form.

If necessary, the dairy product or nutritional formula, such as the infant formula, may contain emulsifiers and stabilizers such as soy lecithin, citric acid esters of mono- and di-glycerides, and the like. This is especially the case if the composition is provided in liquid form.

A preferred embodiment relates to a dairy product or nutritional formula, such as an infant formula, wherein at least one source of carbohydrates is selected form the group consisting of lactose, corn syrup solids, fructose, glucose, maltodextrins, dried glucose syrups, sucrose, trehalose, galactose, maltose, honey powders, starch, oligosaccharides, raftiline and raftilose.

Another preferred embodiment relates to a dairy product or nutritional formula, such as an infant formula, further comprising anhydrous milk fat.

A yet other preferred embodiment relates to a dairy product or nutritional formula, such as an infant formula, further comprising LC-PUFAs such as DHA, EPA, DPA and/or ARA.

The dairy product or nutritional formula, such as the infant formula, may further comprise flavours such as but not limited to vanillin.

A particular preferred embodiment relates to a dairy product or nutritional formula, such as an infant formula, further comprising fructo-oligosaccharides such as raftiline and/or raftilose.

The dairy product or nutritional formula, such as the infant formula, may be a liquid formula or a powder that is to be reconstituted before use. A preferred embodiment is an infant formula being a powder.

A particular preferred embodiment of the present invention relates to a dairy product or nutritional formula, such as an infant formula, which is phase stable after reconstitution. More specifically the infant nutritional formula is phase stable for a period of at least 10 min, such as at least 30 min, 1 hour, 2 hours, 6 hours, 12 hours, 24 hours, 48 hours, 3 days, 4 days, 5 days or at least 6 days after reconstitution.

Another preferred embodiment relates to a liquid dairy product or nutritional formula, such as a liquid infant formula, made by reconstituting the powder according to the present invention. The liquid dairy product or nutritional formula, such as an infant formula, is preferable phase stable. Thus in a preferred embodiment the liquid dairy product or nutritional formula is phase stable for a period of at least 10 min, such as at least 30 min, 1 hour, 2 hours, 6 hours, 12 hours, 24 hours, 48 hours, 3 days, 4 days, 5 days or at least 6 days after reconstitution.

### Examples

### Example 1: Model for a Starter Infant Formulae Type I

| Description | Moisture | On Dry Matter | Kg | Benchscale Kg | |
|---|---|---|---|---|---|
| Vegetable Oilmix | 0.00 | 24.77 | 24.77 | 11.01 | |
| Lactose mono | 3.00 | 5.79 | 5.97 | 2.65 | |
| hydrate | | | | | |
| DWP 28 | 4.00 | 18.60 | 19.38 | 8.61 | |
| Skim milk MHIF | 4.00 | 16.50 | 17.19 | 7.64 | |
| Ca Citrate tri basic | 10.00 | 0.70 | 0.78 | 0.35 | |
| K Citrate tri basic | 10.00 | 0.26 | 0.29 | 0.13 | |
| K Phosphate di basic | 5.00 | 0.11 | 0.12 | 0.05 | |
| Water | 0.00 | 0.00 | 55.00 | 24.44 | |
| Total | | 66.73 | 123.49 | 54.88 | 54.04 % TS |

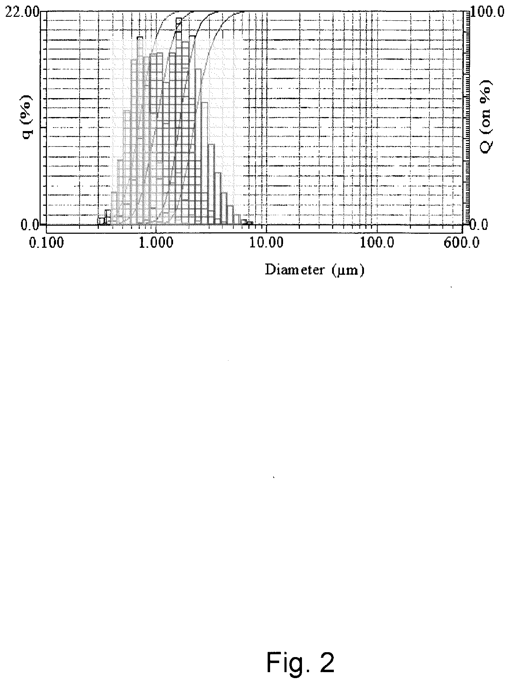

24.44 kg of softened water of 70°C were added in a stirred vessel. 50g of K₂HP0₄, 130g K₃Citrate and 350g Ca₃(Citrate)₂ were dissolved/suspended. Then 8.61 kg of demineralised whey powder (DWP 28), 7.64kg skim milk powder and 2.65 kg Lactose mono hydrate were dissolved. Under vigorous stirring 11.01kg of a vegetable oil mix was mixed in. The mixture was stirred for 45 min at 60°C. Then this pre emulsion was preheated to 65°C in a PHE and then heated up to 85°C and homogenized in a Cavitron at 50 Hz, which corresponds to 12'000rpm. The liquid had a holding time of 15 seconds at 85°C. At this point a D(4.3) of 2.225um could be obtained. To adjust the targeted PSD the Cavitron (rotor-stator) was follow by a 1 stage homogenization on the second head at 20, 40 or 60 bar. The particle size distribution is shown in figure 2.

### Example 2: Model for a Starter Infant Formulae Type II

| Description | Moisture | On DM | Kg | Benchscale Kg | |
|---|---|---|---|---|---|
| Vegetable Oilmix | 0.00 | 26.79 | 26.79 | 13.39 | |
| Lactose mono hydrate | 3.00 | 23.95 | 24.69 | 12.35 | |
| MSWP 28 | 4.00 | 21.51 | 22.41 | 11.20 | |
| Skim milk MHIF | 4.00 | 10.20 | 10.63 | 5.31 | |
| Ca Citrate tri basic | 10.00 | 0.39 | 0.44 | 0.22 | |
| K Citrate tri basic | 10.00 | 0.33 | 0.36 | 0.18 | |
| K Phosphate di basic | 5.00 | 0.32 | 0.33 | 0.17 | |
| Water | 0.00 | 0.00 | 65.00 | 32.50 | |
| Total | | 83.48 | 150.64 | 42.65 | 65.42 % TS |

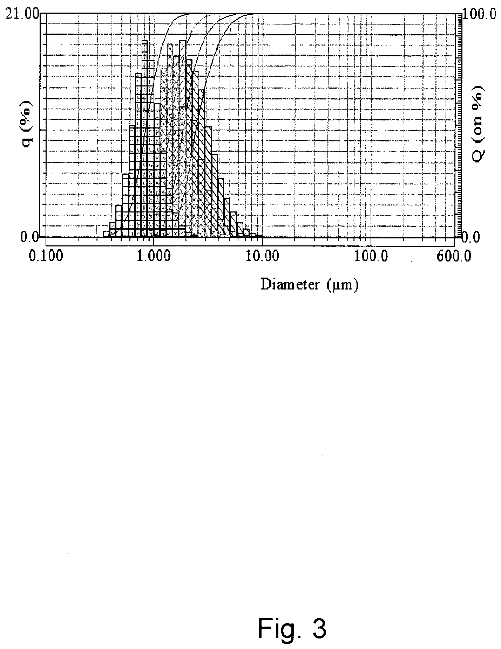

32.5 kg of softened water of 70°C were added in a stirred vessel. 170g of K₂HPO₄, 180g K₃Citrate and 220g Ca₃(Citrate)₂ were dissolved/suspended. Then 11.2 kg of demineralised whey powder (MSWP 28), 5.31kg skim milk powder and 12.35 kg Lactose mono hydrate were dissolved. Under vigorous stirring 13.39kg of a vegetable oil mix was mixed in. The mixture was stirred for 45 min at 60°C. Then this pre emulsion was preheated to 65°C in a PHE and then heated up to 85°C and homogenized in a Cavitron at 50 Hz, which corresponds to 12'000rpm. The liquid had a holding time of 15 seconds at 85°C. At this point a D(4.3) of 2.573um could be obtained. To adjust the targeted PSD the Cavitron (rotor-stator) was followed by a 1 stage homogenization on the second head at 20, 40 or 60 bar. The particle size distribution is shown in figure 3.

### Figure legends

Figure 1: A) An example of a monomodal fat particle size distribution. B) An example of a bimodal fat particle size distribution.
Figure 2: Particle size distribution of Starter Infant Formulae Lactogen 1, manufactured as set forth in example 2.
Figure 3: Particle size distribution of Starter Infant Formulae NAN 1, manufactured as set forth in example 3.

### References

Michalski et al, 2005, J Dairy Sci 88:1927-1940.
Salminen S, Quwehand A. Benno Y. et al "Probiotics: how should they be defined" Trend Food Sci. Technol. 1999;10 107-110).
Michalski et al 2001, Lait 81: 787-796.
Roberfroid MB; Prebiotics: The Concept Revisited. J Nutr. 2007; 137: 830S).

## Claims

1. A process for the manufacture of an infant nutritional formula comprising the steps of
a) providing a mixture comprising vegetable fat, protein and carbohydrates,
b) mixing said mixture in a continuous high shear homogenizer rotor stator mixer and subsequently subjecting said mixture to homogenization at a pressure between 0 and 60 bar so as to provide a composition with a monomodal fat particle size distribution wherein 5% or less of the fat particles have a size of less than 0.8 µm, and at least 95% of the fat particles have a size of between 0.8 µm and 5 µm, and 5% or less of the fat particles have a size of more than 5 µm.

2. The process according to claim 1, wherein the mixture is homogenized at a pressure between 0 and 60 bar and subsequently dried so as to provide a powdered composition with a monomodal fat particle size distribution wherein 5% or less of the fat particles have a size of less than 0.8 µm, and at least 95% of the fat particles have a size of between 0.8 µm and 5 µm, and 5% or less of the fat particles have a size of more than 5 µm when reconstituted.

3. The process according to claim 1 or 2, wherein the mixture is homogenized at a pressure between 0 and 60 bar so as to provide a composition with a monomodal fat particle size distribution **characterized by** having a mode diameter X in the range of 0.8-12 µm, preferably in the range of 0.8-11 µm, 0.8-10 µm, 0.8-9 µm, 0.8-8 µm, 0.8-7 µm, 0.8-6 µm, 0.8-5 µm, 0.8-4 µm, 1-4 µm, 1-3 µm, 2-4 µm, and most preferably in the range of 2-3 µm.

4. The process according to any of the preceding claims, wherein the mixture is homogenized at a pressure between 0 and 60 bar and subsequently dried so as to provide a powdered composition with a monomodal fat particle size distribution, wherein the mode diameter X is a number in the range 0.8-12 µm, preferably in the range 0.8-11 µm, 0.8-10 µm, 0.8-9 µm, 0.8-8 µm, 0.8-7 µm, 0.8-6 µm, 0.8-5 µm, 0.8-4 µm, 1-4 µm, 1-3 µm, 2-4 µm, and most preferably in the range 2-3 µm when reconstituted in liquid.

5. An infant nutritional formula which is obtainable by the process according any one of claims 1-4, **characterized in that** said nutritional formula has a monomodal fat particle size distribution wherein 5% or less of the fat particles have a size of less than 0.8 µm, and at least 95% of the fat particles have a size of between 0.8 µm and 5 µm, and 5% or less of the fat particles have a size of more than 5 µm.

6. An infant nutritional formula according to claim 5, comprising vegetable fat, protein and carbohydrates **characterized by** having a monomodal fat particle distribution **characterized by** having a mode diameter, X, which is in the range 0.8-11 µm, such as 0.8-10 µm, such as 0.8-9 µm, such as 0.8-8 µm, such as 0.8-7 µm, such as 0.8-6 µm, such as 0.8-5 µm, such as 0.8-4 µm, such as 1-4 µm, such as 1-3 µm, such as 2-4 µm, or such as in the range 2-3 µm.

7. An infant nutritional formula according to claim 6, said infant nutritional formula being a powder **characterized by** having a monomodal fat particle distribution wherein the mode diameter X is in the range 0.8-11 µm, such as 0.8-10 µm, such as 0.8-9 µm, such as 0.8-8 µm, such as 0.8-7 µm, such as 0.8-6 µm, such as 0.8-5 µm, such as 0.8-4 µm, such as 1-4 µm, such as 1-3 µm, such as 2-4 µm, or such as in the range 2-3 µm, when reconstituted in liquid.

8. An infant nutritional formula according to claim 6, **characterized by** having a monomodal fat particle distribution wherein the mode diameter X is in the range 0.8-5 µm, and wherein 5% or less of fat particles having a size of less than 0.8 µm, and at least 95% of fat particle having a size of between 0.8 µm and 5 µm, and 5% or less of fat particle having a size of more than 5 µm.

9. An infant nutritional formula according to claim 7, said infant nutritional formula being a powder **characterized by** having a monomodal fat particle distribution wherein the mode diameter X is in the range 0.8-5 µm, and wherein 5% or less of fat particles having a size of less than 0.8 µm, and at least 95% of fat particle having a size of between 0.8 µm and 5 µm, and 5% or less of fat particle having a size of more than 5 µm when reconstituted in liquid.

10. A liquid infant nutritional formula made by reconstituting the powder according to claim 7 or 9.

## Patentansprüche

1. Verfahren zur Herstellung einer Säuglingsnahrung, das folgende Schritte umfasst:
a) Bereitstellen eines Gemischs, das Pflanzenfett, Protein und Kohlenhydrate umfasst,
b) Mischen des Gemischs in einem kontinuierlich arbeitenden Rotor/Stator-Homogenisierungsmischer mit hoher Scherkraft und anschließendes Unterziehen des Gemischs einer Homogenisierung bei einem Druck zwischen 0 und 60 bar, um eine Zusammensetzung mit einer monomodalen Fettpartikelgrößenverteilung bereitzustellen, wobei 5 % oder weniger der Fettpartikel eine Größe von weniger als 0,8 µm aufweisen und mindestens 95 % der Fettpartikel eine Größe zwischen 0,8 µm und 5 µm aufweisen und 5 % oder weniger der Fettpartikel eine Größe von mehr als 5 µm aufweisen.

2. Verfahren nach Anspruch 1, wobei das Gemisch bei einem Druck zwischen 0 und 60 bar homogenisiert und anschließend getrocknet wird, um eine pulverförmige Zusammensetzung mit einer monomodalen Fettpartikelgrößenverteilung bereitzustellen, wobei bei Rekonstituierung 5 % oder weniger der Fettpartikel eine Größe von weniger als 0,8 µm aufweisen und mindestens 95 % der Fettpartikel eine Größe zwischen 0,8 µm und 5 µm aufweisen und 5 % oder weniger der Fettpartikel eine Größe von mehr als 5 µm aufweisen.

3. Verfahren nach Anspruch 1 oder 2, wobei das Gemisch bei einem Druck zwischen 0 und 60 bar homogenisiert wird, um eine Zusammensetzung mit einer monomodalen Fettpartikelgrößenverteilung bereitzustellen, **dadurch gekennzeichnet, dass** sie einen Modusdurchmesser X im Bereich von 0,8-12 µm, vorzugsweise im Bereich von 0,8-11 µm, 0,8-10 µm, 0,8-9 µm, 0,8-8 µm, 0,8-7 µm, 0,8-6 µm, 0,8-5 µm, 0,8-4 µm, 1-4 µm, 1-3 µm, 2-4 µm und am meisten bevorzugt im Bereich von 2-3 µm aufweist.

4. Verfahren nach einem der vorhergehenden Ansprüche, wobei das Gemisch bei einem Druck zwischen 0 und 60 bar homogenisiert und anschließend getrocknet wird, um eine pulverförmige Zusammensetzung mit einer monomodalen Fettpartikelgrößenverteilung bereitzustellen, wobei der Modusdurchmesser X bei Rekonstituierung in Flüssigkeit eine Zahl im Bereich von 0,8-12 µm, vorzugsweise im Bereich von 0,8-11 µm, 0,8-10 µm, 0,8-9 µm, 0,8-8 µm, 0,8-7 µm, 0,8-6 µm, 0,8-5 µm, 0,8-4 µm, 1-4 µm, 1-3 µm, 2-4 µm und am meisten bevorzugt im Bereich von 2-3 µm ist.

5. Säuglingsnahrung, die durch das Verfahren nach einem der Ansprüche 1-4 erhalten werden kann, **dadurch gekennzeichnet, dass** die Nahrung eine monomodale Fettpartikelgrößenverteilung aufweist, wobei 5 % oder weniger der Fettpartikel eine Größe von weniger als 0,8 µm aufweisen und mindestens 95 % der Fettpartikel eine Größe zwischen 0,8 µm und 5 µm aufweisen und 5 % oder weniger der Fettpartikel eine Größe von mehr als 5 µm aufweisen.

6. Säuglingsnahrung wie eine Nahrung nach Anspruch 5, umfassend Pflanzenfett, Protein und Kohlenhydrate, **dadurch gekennzeichnet, dass** sie eine monomodale Fettpartikelverteilung aufweist, **dadurch gekennzeichnet, dass** sie einen Modusdurchmesser X aufweist, der im Bereich von 0,8-11 µm, wie etwa 0,8-10 µm, wie etwa 0,8-9 µm, wie etwa 0,8-8 µm, wie etwa 0,8-7 µm, wie etwa 0,8-6 µm, wie etwa 0,8-5 µm, wie etwa 0,8-4 µm, wie etwa 1-4 µm, wie etwa 1-3 µm, wie etwa 2-4 µm oder wie etwa im Bereich 2-3 µm liegt.

7. Säuglingsnahrung nach Anspruch 6, wobei die Säuglingsnahrung ein Pulver ist, **dadurch gekennzeichnet, dass** sie eine monomodale Fettpartikelverteilung aufweist, wobei der Modusdurchmesser X bei Rekonstituierung in Flüssigkeit im Bereich von 0,8-11 µm, wie etwa 0,8-10 µm, wie etwa 0,8-9 µm, wie etwa 0,8-8 µm, wie etwa 0,8-7 µm, wie etwa 0,8-6 µm, wie etwa 0,8-5 µm, wie etwa 0,8-4 µm, wie etwa 1-4 µm, wie etwa 1-3 µm, wie etwa 2-4 µm oder wie etwa im Bereich 2-3 µm liegt.

8. Säuglingsnahrung nach Anspruch 6, **dadurch gekennzeichnet, dass** sie eine monomodale Fettpartikelverteilung aufweist, wobei der Modusdurchmesser X im Bereich von 0,8-5 µm liegt und wobei 5 % oder weniger der Fettpartikel eine Größe von weniger als 0,8 µm aufweisen und wenigstens 95 % der Fettpartikel eine Größe zwischen 0,8 µm und 5 µm aufweisen und 5 % oder weniger der Fettpartikel eine Größe von mehr als 5 µm aufweisen.

9. Säuglingsnahrung nach Anspruch 7, wobei die Säuglingsnahrung ein Pulver ist, **dadurch gekennzeichnet, dass** sie eine monomodale Fettpartikelverteilung aufweist, wobei der Modusdurchmesser X bei Rekonstituierung in Flüssigkeit im Bereich von 0,8-5 µm liegt und wobei 5 % oder weniger der Fettpartikel eine Größe von weniger als 0,8 µm aufweisen und wenigstens 95 % der Fettpartikel eine Größe zwischen 0,8 µm und 5 µm aufweisen und 5 % oder weniger der Fettpartikel eine Größe von mehr als 5 µm aufweisen.

10. Flüssige Säuglingsnahrung, hergestellt durch Rekonstituieren des Pulvers gemäß Anspruch 7 oder 9.

## Revendications

1. Procédé de fabrication d'une formule nutritionnelle pour nourrissons comprenant les étapes consistant à
a) fournir un mélange comprenant de la matière grasse végétale, une protéine et des glucides,
b) mélanger ledit mélange dans un mélangeur homogénéisateur rotor-stator continu à fort cisaillement, puis soumettre ledit mélange à une homogénéisation à une pression comprise entre 0 et 60 bar de manière à fournir une composition avec une distribution granulométrique de matière grasse monomodale dans laquelle 5 % ou moins des particules de matière grasse ont une taille inférieure à 0,8 µm et au moins 95 % des particules de matière grasse ont une taille comprise entre 0,8 µm et 5 µm, et 5 % ou moins des particules de matière grasse ont une taille supérieure à 5 µm.

2. Procédé selon la revendication 1, dans lequel le mélange est homogénéisé à une pression comprise entre 0 et 60 bar et est ensuite séché de manière à fournir une composition pulvérulente avec une distribution granulométrique de matière grasse monomodale dans laquelle 5 % ou moins des particules de matière grasse ont une taille inférieure à 0,8 µm et au moins 95 % des particules de matière grasse ont une taille comprise entre 0,8 µm et 5 µm, et 5 % ou moins des particules de matière grasse ont une taille supérieure à 5 µm lorsqu'elle est reconstituée.

3. Procédé selon la revendication 1 ou 2, dans lequel le mélange est homogénéisé à une pression comprise entre 0 et 60 bar de manière à fournir une composition avec une distribution granulométrique de matière grasse
monomodale **caractérisée en ce que** le mode du diamètre X est dans la plage de 0,8 à 12 µm, de préférence dans la plage de 0,8 à 11 µm, 0,8 à 10 µm, 0,8 à 9 µm, 0,8 à 8 µm, 0,8 à 7 µm, 0,8 à 6 µm, 0,8 à 5 µm, 0,8 à 4 µm, 1 à 4 µm, 1 à 3 µm, 2 à 4 µm et le plus préférablement dans la plage de 2 à 3 µm.

4. Procédé selon l'une quelconque des revendications précédentes, dans lequel le mélange est homogénéisé à une pression comprise entre 0 et 60 bar et séché par la suite de manière à fournir une composition pulvérulente avec une distribution granulométrique de matière grasse monomodale dans laquelle le mode du diamètre X est un nombre compris dans la plage de 0,8 à 12 µm, de préférence dans la plage de 0,8 à 11 µm, 0,8 à 10 µm, 0,8 à 9 µm, 0,8 à 8 µm, 0,8 à 7 µm, 0,8 à 6 µm, 0,8 à 5 µm, 0,8 à 4 µm, 1 à 4 µm, 1 à 3 µm, 2 à 4 µm et le plus préférablement dans la plage de 2 à 3 µm lorsqu'elle est reconstituée dans un liquide.

5. Formule nutritionnelle pour nourrissons pouvant être obtenue par le procédé selon l'une quelconque des revendications 1 à 4, **caractérisée en ce que** ladite formule nutritionnelle pour nourrissons présente une distribution granulométrique de matière grasse monomodale dans laquelle 5 % ou moins des particules de matière grasse ont une taille inférieure à 0,8 µm et au moins 95 % des particules de matière grasse ont une taille comprise entre 0,8 µm et 5 µm, et 5 % ou moins des particules de matière grasse ont une taille supérieure à 5 µm.

6. Formule nutritionnelle pour nourrissons, selon la revendication 5, comprenant de la matière grasse végétale, une protéine et des glucides, **caractérisée en ce qu'**elle présente une répartition de particules de matière grasse monomodale **caractérisée en ce que le mode du diamètre X** se trouve dans la plage de 0,8 à 11 µm, telle que 0,8 à 10 µm, telle que 0,8 à 9 µm, telle que 0,8 à 8 µm, telle que 0,8 à 7 µm, telle que 0,8 à 6 µm, telle que 0,8 à 5 µm, telle que 0,8 à 4 µm, telle que 1 à 4 µm, telle que 1 à 3 µm, telle que 2 à 4 µm ou telle que dans la plage de 2 à 3 µm.

7. Formule nutritionnelle pour nourrissons selon la revendication 6, ladite formule nutritionnelle pour nourrissons étant une poudre **caractérisée en ce qu'**elle présente une répartition de particules de matière grasse monomodale dans laquelle le mode du diamètre, X, se trouve dans la plage de 0,8 à 11 µm, telle que 0,8 à 10 µm, telle que 0,8 à 9 µm, telle que 0,8 à 8 µm, telle que 0,8 à 7 µm, telle que 0,8 à 6 µm, telle que 0,8 à 5 µm, telle que 0,8 à 4 µm, telle que 1 à 4 µm, telle que 1 à 3 µm, telle que 2 à 4 µm ou telle que dans la plage de 2 à 3 µm lorsqu'elle est reconstituée dans un liquide.

8. Formule nutritionnelle pour nourrissons selon la revendication 6, **caractérisée en ce qu'**elle présente une répartition de particule de matière grasse monomodale dans laquelle le mode du diamètreX se trouve dans la plage de 0,8 à 5 µm et dans laquelle 5 % ou moins des particules de matière grasse ont une taille inférieure à 0,8 µm et au moins 95 % des particules de matière grasse ont une taille comprise entre 0,8 µm et 5 µm, et 5 % ou moins des particules de matière grasse ont une taille supérieure à 5 µm.

9. Formule nutritionnelle pour nourrissons selon la revendication 7, ladite formule nutritionnelle pour nourrissons étant une poudre **caractérisée en ce qu'**elle présente une répartition de particules de matière grasse monomodale dans laquelle le mode du diamètre X se trouve dans la plage de 0,8 à 5 µm et dans laquelle 5 % ou moins des particules de matière grasse ont une taille inférieure à 0,8 µm et au moins 95 % des particules de matière grasse ont une taille comprise entre 0,8 µm et 5 µm, et 5 % ou moins des particules de matière grasse ont une taille supérieure à 5 µm lorsqu'elle est reconstituée dans un liquide.

10. Formule nutritionnelle pour nourrissons fabriquée par reconstitution de la poudre selon la revendication 7 ou 9.
